# EUROPÄISCHE PATENTANMELDUNG

(11) **EP 2 581 726 A2**
(43) Veröffentlichungstag der Anmeldung: **17.04.2013**
(21) Anmeldenummer: 12006712.9
(22) Anmeldetag: 26.09.2012
(51) Int. Cl.: G01N 15/14

(54) **Verfahren und Vorrichtung zur Bestimmung von Partikeln im Siebgut**

(30) Priorität: 10.10.2011 DE 102011115368
(71) Anmelder: J. Engelsmann AG, 67059 Ludwigshafen am Rhein (DE)
(72) Erfinder: Schäfer, Thomas, 67063 Ludwigshafen (DE); Fisher, Bernd, 67141 Neuhofen (DE); Rädle, Matthias, 67273 Weisenheim / Berg (DE); Zimmer, Thomas, 67063 Ludwigshafen (DE)
(74) Vertreter: Kesselhut, Wolf

(57) **Zusammenfassung**

Ein Verfahren zur Bestimmung der Größe von Partikeln (2) in einem Partikelstrom, insbesondere einem Siebgutstrom, der durch eine Messzelle (4) hindurch tritt, die in einem linienförmigen Bereich (25) mit Licht (20) durchstrahlt wird, wobei der linienförmig durchstrahlte Bereich (25) durch ein optisches Abbildungssystem auf eine einzelne Zeile (30) aus benachbart zueinander angeordneten, in vorgegebenen Zyklen ausgelesenen Fotozellen (30.1 bis 30.102), insbesondere Fotodioden, abgebildet und aus den Signalen einer jeden Fotozelle ein digitales Helligkeitssignal erzeugt wird, und wobei aus der Position einer Fotozelle (30.1 bis 30.102) in der Fotozellenzeile (30) und der Größe des der Fotozelle zugeordneten digitalen Signalwerts ein Helligkeitsverlauf über die Fotozellenzeile hinweg ermittelt wird, zeichnet sich dadurch aus, dass aus der Steigung des Helligkeitsverlaufs und/oder aus der Änderung der Steigung des Helligkeitsverlaufs während eines Auslesezyklus ein Wert für den erfassten Durchmesser eines Partikels (2) bestimmt wird, welches den linienförmig durchstrahlten Bereich (25) in der Messzelle (4) passiert hat. Die Erfindung betrifft weiterhin eine Vorrichtung zur Durchführung des Verfahrens.

## Beschreibung

Die Erfindung betrifft ein Verfahren und eine Vorrichtung zur Bestimmung der Größe von Partikeln in Siebgut gemäß dem Oberbegriff von Anspruch 1 und 14.

In verfahrenstechnischen Anwendungen ist es bei der Verarbeitung von Schüttgut neben anderen Eigenschaften eines Produkts von besonderer Bedeutung, dass das Produkt eine definierte, immer gleich bleibende und bekannte Partikelgrößenverteilung aufweist. So darf der Partikeldurchmesser des erzeugten Produktes bei expandierbarem Polystyrol in einer Produktionsanlage nur geringen Schwankungen unterliegen. Sind die in der Produktionsanlage erzeugten Partikel zu groß oder zu klein, so ändert sich das Aufschäumverhalten des Produkts beim späteren Anwender, was zu nachteiligen Schwankungen in der Qualität des Endprodukts, wie z.B. Styroporplatten, führt.

Bei zu kleinen Partikeldurchmessern kommt in dem zuvor genannten Beispiel noch hinzu, dass die in der Produktion in die Partikel eingepressten Gase, wie z.B. CO₂ oder Pentan, zu schnell aus den Partikeln heraus diffundieren und ebenfalls das Aufschäumverhalten negativ beeinträchtigen. Aus den zuvor genannten Gründen ist es daher wünschenswert, die Verteilung der Partikelgröße bevorzugt in Echtzeit zu messen, um beim Über- oder Unterschreiten eines vorgegebene Solldurchmessers gegebenen Falls direkt in den Produktionsprozess eingreifen zu können.

Die Hauptschwierigkeit bei der Echtzeitbestimmung der Partikeldurchmesser stellt in technischen Anlagen die hohe Komplexität und Empfindlichkeit der Messgeräte dar, die insbesondere im Falle einer kontinuierlichen Messung der Durchmesserverteilung mitunter erheblich ist. Die meisten Messapparaturen sind daher Offline-Messapparaturen, bei denen eine Probe des Produktstroms genommen, ins Labor transportiert und dort in der Messapparatur auf die enthaltenen Partikelgrößen hin analysiert wird.

Aus der DE 100 01 701 A1 sind ein Verfahren und eine Vorrichtung zur Bestimmung der Größe von Partikeln im Mikrometer- und Submikrometerbereich bekannt, bei denen eine Messzone mit einer der maximalen Partikelgröße entsprechenden Größe in einer mit einem Laserstrahl beaufschlagten Küvette auf einen Fotodekektor abgebildet wird. Die elektrischen Signale des Fotodetektors werden anschließend in einen mit hoher Frequenz getakteten elektronischen Speicher eingelesen und aus der Abschwächung der Transmission die Projektionsfläche die durchschnittliche Partikelgröße bestimmt. Da die Abschwächung querempfindlich gegenüber den Absorptionseigenschaften des Produktes ist, ergibt sich je nach Produkt ein nicht vernachlässigbarer Messfehler.

Die DE 10 2006 049 517A1 beschreibt eine Vorrichtung zur Bestimmung der Partikelgröße von Schüttgut, bei der ein abgezweigter Partikelstrom im freien Fall durch eine Kamera und eine gepulste Beleuchtung abfotografiert und die erzeugten Bilddateien als Graustufendarstellung mit weiteren, durch ein NIR-Spektrometer im Bereich des Aufgabetrichters ermittelten physikalischen Parametern des Partikelstroms korreliert werden. Die Schrift gibt keinen Hinweis auf die Art der eingesetzten Kamera und das nachgeordnete Auswertverfahren.

Aus der US 2009 0190 128A1 ist ein Partikelzähler bekannt, bei dem das an den Partikeln eines Partikelstroms gestreute Licht in einem CMOS-Detektor nachgewiesen wird. Die Schrift gibt keinen Hinweis darauf, die Größenverteilung der Partikel in einer Messzelle anhand der Steigung oder der Änderung der Steigung des Helligkeitsverlaufs zu bestimmen, der vom Detektor erfasst wird. Zudem eignet sich der Zähler aufgrund der Abhängigkeit der Streueigenschaften von der Größe und Oberflächenstruktur der Partikel sowie der Farbe des eingesetzten Streulichts nur für Partikel mit einem Durchmesser im Mikrometerbereich, wohingegen bei Partikeln mit einer Größe im Millimeterbereich, z.B. 5 mm, erhebliche Ungenauigkeiten auftreten.

In der DE 10 2006 019 138A1 wird ein Messverfahren beschrieben, bei dem monochromatisches Licht in einem konvergenten Strahlengang dazu eingesetzt wird, um mittels Beugung die Partikelgrößenverteilung zu bestimmen. Das beschriebene Verfahren ist bei Partikeln mit einer Größe im Millimeterbereich, z.B. im Bereich von 1 mm bis zu 5mm nur mit großen Einschränkungen einsetzbar, da der konvergente Strahlengang insbesondere bei sehr kleinen Partikeln ein breites Beugungsbild erzeugt, welches für die Bestimmung der Größe der Partikel benötigt wird. Darüber hinaus lassen sich einzelne große Partikel mit diesem System nicht vermessen.

In der DE 10 054 782A1 wird weiterhin ein Verfahren beschrieben, bei dem ein Partikelkollektiv mit zwei oder mehreren Wellenlängen durchstrahlt wird, um hierdurch eine verbesserte Information hinsichtlich der Partikelkonzentration und der Verteilung der Partikelgrößen zu erhalten. Über die elektronische Auswertung der erhaltenen Messsignale gibt die Schrift keinerlei Hinweis.

Aus der DE 10 2006 041 279A1 ist ferner ein Laserdopplervelocimeter bekannt, mit welchem sich die Geschwindigkeit und Größe von vorbeibewegten Teilchen messen lassen. Das Laserdopplervelocimeter wertet ein Interferenzsstreifenmuster in einer Signalerfassung aus. Obgleich die Vorrichtung eine hohe Auflösung liefert, ist die mechanische Empfindlichkeit und der Aufwand zur Justage von Laserdopplervelocimetern erheblich.

Die DE 10 2007 013 321A1 offenbart ein Verfahren, bei dem die Partikelgrößenmessung dadurch durchgeführt wird, dass ein herab fallender Schüttgutstrom durch wenigstens zwei Kameras mit einem CCD-Flächensensor oder einem CMOS-Bildsensor aufgenommen wird. Um hierbei den Messbereich für die erfassbare Partikelgröße zu verbessern, weisen die Kameras unterschiedliche Vergrößerungsverhältnisse auf. Die eingesetzten Flächen-Bildsensoren in den Kameras sind erheblich teurer als Zeilenkameras und erfordern eine rechenintensive Nachbearbeitung der erfassten 2-dimensionalen Bilddaten, wodurch eine Echtzeit-Auswertung - wenn überhaupt - nur mit einer geringen zeitlichen Auflösung möglich ist.

Die US 20050046841 offenbart ein Verfahren und eine Vorrichtung, bei denen die Projektionsfläche von Partikeln in einer durchleuchteten Messzelle durch eine Flächenkamera erfasst wird, um daraus die Partikelgröße zu bestimmen. Dabei werden die Pixel, die zu einer zusammengehörenden Struktur gehören, gezählt, und die Anzahl der Pixel ergibt die Projektionsfläche der Partikel. Durch den hierbei erforderlichen Einsatz einer Flächenkamera ist die Auswertung der aufgenommenen zweidimensionalen Bilddaten gegenüber den mit einer Zeilenkamera aufgenommenen Bilddaten vergleichsweise rechenintensiv, wodurch die maximal mögliche zeitliche Auflösung erheblich verringert wird. Das Verfahren eignet sich daher nur bedingt zur Echtzeiterfassung der Partikelgrößen in einer Produktionsanlage.

Demgemäß ist es eine Aufgabe der vorliegenden Erfindung, ein Verfahren sowie eine Vorrichtung zur Durchführung des Verfahrens zu schaffen, mit denen sich die Größe von Partikeln in einem Partikelstrom, insbesondere von Schüttgutpartikeln, welche eine Siebvorrichtung verlassen, mit einer hohen Genauigkeit und einer hohen zeitlichen Auflösung erfassen lässt.

Diese Aufgabe wird erfindungsgemäß durch ein Verfahren mit den Merkmalen von Anspruch 1 und eine Vorrichtung mit den Merkmalen von Anspruch 14 gelöst.

Weitere Merkmale der Erfindung sind in den Unteransprüchen beschrieben.

Gemäß der Erfindung wird bei einem Verfahren zur Bestimmung der Größe von Partikeln in einem Partikelstrom, insbesondere von Schüttgutpartikeln, welche eine Siebvorrichtung verlassen, ein Teil des Partikelstroms vorzugsweise in vertikaler Richtung durch eine Messzelle hindurch geführt. Die Messzelle wird in einem linienförmigen Bereich, der bei der bevorzugten Ausführungsform der Erfindung in horizontaler Richtung zu den in vertikaler Richtung verlaufendem Partikelstrom verläuft, mit Licht einer Lichtquelle bestrahlt, bei der es sich beispielsweise um eine weißes Licht aussendende Glühlampe oder auch eine LED handelt. Alternativ kann ein Laser als Lichtquelle zum Einsatz gelangen.

Der linienförmig durchstrahlte Bereich, dessen Querschnittsfläche beispielsweise eine Breite von 10 mm und eine Höhe von 2 mm besitzen kann, wird über ein bekanntes optisches Abbildungssystem mit Hilfe von Linsen oder auch von Spiegeln auf eine einzelne Zeile aus benachbart zueinander angeordneten Fotozellen, insbesondere Fotodioden, abgebildet, die in vorgegebenen Zyklen ausgelesen werden. Jede der Fotozellen, bzw. der Fotodioden erzeugt während eines Auslesezyklus, der beispielsweise 0,33 Millisekunden beträgt, was einer Anzahl von 3000 Auslesezyklen pro Sekunde entspricht, ein digitales Helligkeitssignal, das einer elektronischen Auswerteinrichtung zugeführt wird, die bevorzugt einen Mikrocontroller mit Mikroprozessor und Speicher umfasst.

Im Falle von Fotozellen, die in einer Fotozellenzeile angeordnet sind, werden die Signalwerte einer jeden Fotozelle zu Beginn eines Auslesezyklus zunächst gelöscht. Anschließend wird von jeder Fotozelle nach einer Belichtungszeit von beispielsweise 0,2 Millisekunden der Wert des von der Fotozelle erzeugten Helligkeitssignals zusammen mit der Positionsnummer der Fotozelle in der Fotozellenzeile in einem digitalen Speicher abgelegt. Anhand der Positionsnummer der Fotozelle in der Fotozellenzeile und der bekannten Breite einer jeden Fotozelle ergibt sich daraus die örtliche Position der jeweiligen Fotozelle in der Fotozellenzeile und über diese, bzw. die Positionsnummer, der Helligkeitsverlauf über die gesamte Breite der Fotozellenzeile hinweg, aus der sich der Durchmesser eines Partikels, welches die Fotozellenzeile passiert, wie nachfolgend aufgeführt bestimmen lässt.

Bei der bevorzugten Ausführungsform der Erfindung besitzt die Fotozellenzeile beispielsweise 102 Fotodioden, die als lineares Array jeweils eine Breite von ca. 78 µm und eine Höhe im Bereich von ca. 85 µm aufweisen.

Im Falle der bei der bevorzugten Ausführungsform eingesetzten Fotodioden, die jeweils ein zur momentanen Helligkeit des auftreffenden Lichts korrespondierendes elektrisches Helligkeitssignal erzeugen, werden die jeweils erzeugten Helligkeitssignale über die Belichtungszeit hinweg durch einen einer jeden Fotodiode nachgeordneten Integrator aufintegriert. Obgleich der Integrator für jede Fotodiode auch hardwaremäßig als eigenes Elektronikbauteil ausgeführt sein kann, ist dieser bevorzugt softwaremäßig im Mikrocontroller realisiert. Der Verlauf der aufintegrierten elektrischen Helligkeitssignale über die Fotodiodenzeile hinweg wird in diesem Falle bevorzugt im Speicher des Mikrocontroller als ein Datensatz abgelegt, der Wertepaare enthält, die die jeweilige Positionsnummer (1 - 102) der Fotodiode zusammen mit dem zugehörigen aufintegrierten Wert für die Menge an aufgetroffenem Licht der jeweiligen Fotodiode umfassen. Der aufintegrierte Wert für die Menge an aufgetroffenem Licht ist beispielsweise ein Wert zwischen 0 und 255, kann jedoch auch eine andere Größe besitzen.

Obgleich bei der bevorzugten Ausführungsform der Erfindung Fotodioden bzw. Fotodiodenzeilen als solche zum Einsatz gelangen, ist es ebenfalls möglich, Fotozellen einzusetzen, die ähnlich einem Fotometer oder einer CCD-Zelle ein elektrisches Signal erzeugen, welches von vorneherein zur Menge an aufgetroffenem Licht korrespondiert, so dass eine Aufintegration in diesem Falle entfallen kann. Der Einfachheit halber wird nachfolgend der allgemeine Ausdruck Fotozelle verwendet, welcher stellvertretend für jedwede Art von fotoelektrischen Detektoren steht.

Das erfindungsgemäße Verfahren zeichnet sich dadurch aus, dass aus dem während eines Messzyklus ermittelten Helligkeitsverlaufs über die Fotozellenzeile hinweg zunächst die Steigung des Helligkeitsverlauf und/oder auch die Änderung der Steigung des Helligkeitsverlaufs während des Auslesezyklus bestimmt wird. Aus der ermittelten Steigung oder aus der Änderung der Steigung wird im Anschluss daran ein Wert für den Durchmesser eines erfassten Partikels bestimmt, welches die Messzelle während des jeweiligen Auslesezyklus passiert hat.

Die Erfindung besitzt den Vorteil, dass im Gegensatz zu bekannten Partikelmesseinrichtungen, bei denen CCD- oder CMOS-Flächenkameras zum Einsatz gelangen, dass Erfassen der während eines Messzyklus durch die Messzelle hindurch getretenen Partikel ausschließlich durch eine einzelne Fotozellenzeile, insbesondere eine Fotodiodenzeile erfolgt, wodurch die zu analysierende Datenmenge bei dem erfindungsgemäßen Verfahren gegenüber einer flächenmäßigen Erfassung erheblich reduziert wird. Hierdurch ist es in Verbindung mit den weiteren Merkmalen der Erfindung überhaupt erst möglich, die unterschiedlichen Durchmesser von Partikeln in einem Partikelstrom, insbesondere in einem Siebgutstrom, der aus einer Siebmaschine austritt, in Echtzeit zu erfassen und bei einer signifikanten Abweichung der erfassten Durchmesser von einem vorgegebenen unteren oder oberen Schwellenwert eine Steuerung der Siebmaschine vorzunehmen.

Obgleich das Verfahren nachfolgend mit Bezugnahme auf eine Siebvorrichtung beschrieben wird, eignet sich dieses ebenfalls grundsätzlich auch für die Steuerung von Produktionsanlagen, beispielsweise Produktionsanlagen zur Herstellung von Polystyrolkugeln, Glaskugeln oder sonstigem bekannten Schüttgut.

Nach einem weiteren der Erfindung zu Grunde liegenden Gedanken lässt sich die Steigung des Helligkeitsverlaufs über die Fotozellenzeile hinweg, die im Wesentlichen der mathematischen ersten Ableitung des Helligkeitsverlaufs entspricht, dadurch bestimmen, das aus zwei Helligkeitswerten zwischen einer ersten Fotozelle und einer unmittelbar benachbarten zweiten Fotozelle über die Fotozellenzeile hinweg jeweils die Differenz der Helligkeitswerte berechnet wird. Diese Differenz wird zusammen mit der entsprechenden Positionsnummer der ersten oder der zweiten Fotozelle als weiterer Datensatz oder Satz von Wertepaaren im Speicher bzw. einem anderen Speicherbereich der elektronischen Auswerteinrichtung abgelegt. Der Durchmesser eines durch die Messzelle während des betrachteten Messzyklus hindurch getretenen Partikels wird bei der zuvor beschriebenen Ausführungsform der Erfindung sodann dadurch bestimmt, dass der Betrag der Steigung des Helligkeitsverlaufs einen vorgegebenen Schwellenwert überschreitet. Dieser kann bei dem zuvor genannten Wertebereich von 0 bis 255 für die Helligkeitswerte beispielsweise ein Helligkeitswert von 20 sein, dessen Größe jedoch veränderbar ist, um das erfindungsgemäße Verfahren an die jeweiligen Randbedingungen für unterschiedliche Partikelgrößen und Partikelformen anpassen zu können.

Da bei einem vollständig erfassten Partikel sowohl der eine, als auch der andere Randbereich desselben während des Messzyklus auf die Fotozellen im entsprechenden ersten oder auch zweiten Randbereich der Fotozellenzeile abgebildet wird, lässt sich durch den über die Differenz der Positionsnummern der jeweiligen Fotozellen im ersten und zweiten Randbereich, bei denen die Steigung des Helligkeitsverlaufs den zuvor genannten bevorzugt variablen Schwellenwert überschreitet, ein Maß für den Partikeldurchmesser bestimmen. Dieser Partikeldurchmesser entspricht bei einem Abbildungsverhältnis des linienförmig durchstrahlten Bereichs auf die Fotozellenzeile im Verhältnis 1:1 der Differenz der Positionswerte multipliziert mit der Breite einer jeden Fotozelle. Bei einem Abbildungsverhältnis von z.B. 1 : 2 entspricht der Partikeldurchmesser entsprechend dem Doppelten der Differenz multipliziert mit der Breite einer jeden Fotozelle.

Da die zuvor beschriebene Ausführungsform zur Bestimmung des Partikeldurchmessers aufgrund der geringen Menge an zu verarbeitenden Daten und der durch das erfindungsgemäße Verfahren bedingten geringen Anzahl an Rechenoperationen zur Bestimmung des Durchmessers bereits mit den heutzutage in Mikrocontrollern eingesetzten Prozessoren in nur wenigen Millisekunden durchgeführt werden kann, lassen sich durch Einsatz des erfindungsgemäßen Verfahrens die Partikeldurchmesser in einem Siebgutstrom mit vergleichsweise geringen Kosten in Echtzeit bestimmen.

Darüber hinaus bietet der Einsatz lediglich einer einzigen Fotozellenzeile den Vorteil, dass keine aufwändigen Bildverarbeitungsprogramme benötigt werden, wie dies bei einer flächenmäßigen Erfassung von Partikeln in einem Partikelstrom der Fall ist, wodurch die verwendete Software in der Programmierung sehr einfach gehalten werden kann und die Gefahr eines Ausfalls durch Programmfehler erheblich reduziert wird.

Nach einem weiteren der Erfindung zu Grunde liegenden Gedanken wird aus dem zuvor ermittelten Datensatz für die Steigung des Helligkeitsverlaufs ein erster und ein zweiter Wendepunkt des Helligkeitsverlaufs ermittelt und aus dem Abstand der einem jeden Wendepunkt zugeordneten Fotozelle, bzw. Fotodiode ein Wert für den Durchmesser des jeweiligen Partikels bestimmt, der während des zugehörigen Messzyklus die Fotozellenzeile passiert hat.

Hierdurch ergibt sich der Vorteil, dass sich der aus der Steigung des Helligkeitsverlaufs bestimmte Durchmesserwert alternativ zu der zuvor beschriebenen Methode auch auf eine zweite Art und Weise ermitteln lässt, was bei bestimmten Messsituationen von Vorteil sein kann. Ein weiterer bedeutender Vorteil der zuletzt beschriebenen Bestimmungsmethode besteht jedoch darin, dass sich durch einen Vergleich des mit Hilfe der ermittelten Wendepunkte aufgefunden Durchmesserwerts mit dem zuvor auf Basis des Schwellenwert-Vergleichs aufgefunden Durchmesserwert eine höhere Genauigkeit bei der Durchmesserbestimmung erzielen lässt und zudem die Gefahr von Messfehlern weiter verringert wird.

Bei der bevorzugten Ausführungsform der Erfindung, die eine besonders schnelle Berechnung ermöglicht, wird der Wendepunkt durch eine wiederholte Differenzbildung zwischen zwei aus der Differenz zwischen den Helligkeitswerten benachbarter Fotozellen bestimmten Werten für die Steigung des Helligkeitsverlaufs über die Fotozellenzeile hinweg und Vergleichen der auf diese Weise ermittelten weiteren Differenzwerte mit einem vorgegebenen Wert, insbesondere mit dem Wert 0, bestimmt. Die in der zuvor beschriebenen Weise durch zweifache Differenzbildung der Helligkeitswerte benachbarter Fotozellen über die Fotozellenzeile hinweg bestimmten weiteren Differenzwerte geben hierbei im Wesentlichen den Verlauf der Änderung der Steigung des Helligkeitsverlaufs über die Fotozellenzeile hinweg an, wobei in diesem Falle der Wendepunkt denjenigen Fotozellen in der Fotozellenzeile zugeordnet ist, bei denen sich die Steigung nicht ändert und demgemäß die Differenz aus den Steigungswerten dem Wert 0 entspricht.

Nach einem weiteren der Erfindung zugrunde liegenden Gedanken ist zur Durchführung des erfindungsgemäßen Verfahrens ausschließlich eine einzige Fotozellenzeile vorgesehen, und das optische Abbildungssystem umfasst ein System von Vergrößerungslinsen oder Spiegeln, die den linienförmig durchstrahlten Bereich innerhalb der Messzelle um einen vorgegebenen Vergrößerungsfaktor, insbesondere um einen Faktor 2, 4 oder 8 vergrößert auf die Fotozellenzeile abbilden. Durch die Anpassung des Abbildungsverhältnisses, was in bekannter Weise durch einen Austausch der eingesetzten Linsen oder auch Spiegel, bzw. durch eine Veränderung des Abstandes zwischen der Messzelle und der Fotozellenzeile oder auf sonstige bekannte Weise erfolgen kann, ergibt sich der Vorteil, dass die Ortsauflösung, die die Genauigkeit des erfindungsgemäßen Verfahrens und der zugehörigen Vorrichtung bestimmt, optimal an die Größe der zu vermessende Partikel angepasst werden kann. So lassen sich durch eine entsprechende Wahl des Vergrößerungsfaktors oder auch eines entsprechenden Verkleinerungsfaktors Partikel mit einem Durchmesser im Bereich von 20 µm, bis hin zu ca. 6000 µm mit ein und derselben Fotozellenzeile lediglich durch Umstellen des Auflösungsverhältnisses vermessen, was für die Anwendung des erfindungsgemäßen Verfahrens in der Praxis, insbesondere in Verbindung mit Siebmaschinen zum Sieben von Schüttgut in Hinblick auf die Praxistauglichkeit und Störunempfindlichkeit sowie auch auf die Kosten einen großen Vorteil darstellt.

Gemäß einer weiteren Ausführungsform des erfindungsgemäßen Verfahrens werden alle Fotozellen der Fotozellenzeile im Wesentlichen gleichzeitig nach einer vorgegebenen Belichtungszeit ausgelesen, die zwischen dem Auslesen und dem erneuten Auslesen in aufeinanderfolgenden Auslesezyklen im Wesentlichen konstant ist. Die Belichtungszeit entspricht hierbei im Falle der bevorzugt eingesetzten einzelnen Fotodiodenzeile der Integrationszeit, über die hinweg die digitalen momentanen Helligkeitswerte einer jeden Fotodiode von einem bevorzugt softwaremäßig im Mikrocontroller realisierten Integrator aufaddiert werden.

Wie die Anmelderin überraschender Weise gefunden hat, sind die Messungen am stabilsten und genauesten, wenn die Belichtungszeit der Fotozellenzeile im Wesentlichen der Zeitdauer entspricht, die ein Partikel mit der zu vermessenden durchschnittlichen Größe zum Passieren der Fotozellenzeile benötigt. Wie von der Anmelderin in diesem Zusammenhang weiterhin gefunden wurde, errechnet sich die Belichtungszeit zwischen zwei Auslesevorgängen bevorzugt durch Produktbildung der Zeilenhöhe der Fotozellenzeile mit dem gewählten Abbildungsverhältnis dividiert durch die Fallgeschwindigkeit der Partikel. Die Fallgeschwindigkeit kann beispielsweise durch einfache Fallversuche im Labor mithilfe von Partikeln empirisch bestimmt werden, die einen im Wesentlichen gleichen Durchmesser und eine im Wesentlichen gleiche Dichte wie die zu vermessenden Partikel besitzen.

Gemäß einem weiteren der Erfindung zu Grunde liegenden Gedanken lässt sich die optimale Belichtungszeit für die Fotozellenzeile auch ohne Vergleichsmessungen in kurzer Zeit ohne zusätzlichen Vorrichtungsaufwand dadurch ermitteln, dass die Belichtungszeit oder Integrationszeit zwischen zwei aufeinanderfolgenden Auslesevorgängen der Fotozellenzeile ausgehend von einem vorgegebenen Maximalwert, beispielsweise einem Maximalwert von 200 Mikrosekunden, nach einer Gruppe von aufeinanderfolgenden Auslesevorgängen, z.B. 1000 Auslesevorgängen oder mehr, um einen vorgegebenen Zeitwert, beispielsweise 5 Mikrosekunden, schrittweise bis auf einen minimalen Belichtungszeitwert herab verringert wird, der zuvor durch Division der Zeilenhöhe der Fotozellenzeile durch die theoretisch erzielbare maximale Fallgeschwindigkeit der Partikel errechnet wird. Hierbei wurde von der Anmelderin gefunden, dass sich bei einer Annäherung der jeweiligen Belichtungszeit an die optimierte Belichtungszeit die Verschmierungen, bzw. die Unschärfe in den Randbereichen der Fotozellenzeile, in denen die seitlichen Ränder der jeweils erfassten Partikel abgebildet werden, innerhalb einer jeden Gruppe von aufeinanderfolgenden Auslesevorgängen in zunehmendem Maße verringern.

Die für die jeweilige Fallgeschwindigkeit der erfassten Partikel optimierte Belichtungszeit lässt sich gleichzeitig oder alternativ dadurch bestimmen, dass die Anzahl der in der zuvor beschriebenen Weise durch zweifache Differenzbildung und Vergleich mit dem Wert 0 bestimmten Wendepunkte im Helligkeitsverlauf innerhalb einer jeden Gruppe von Messzyklen ein Maximum annimmt, was darauf zurück zu führen ist, dass beim Erreichen der optimierten Belichtungszeit das gerade vermessene Partikel sozusagen während der Messung steht und demgemäß die durch den rechten und linken Randbereich erzeugten Wendepunkte mit der maximalen Abbildungsschärfe auf die Fotozellenzeile abgebildet werden. Demgegenüber ist bei einer anfänglich zu hohen Belichtungszeit eine starke Verschmierung der Randbereiche sowie auch eine starke Schwankung der Grundhelligkeit als solche zu beobachten, die darauf zurück zu führen ist, dass mitunter während der Belichtungszeit zwei oder sogar mehr Partikel gleichzeitig erfasst werden.

Demgegenüber wird bei Belichtungszeiten, die kürzer sind als die optimierte Belichtungszeit, lediglich eine reduzierte Anzahl von Wendepunkten erfasst, da die zu vermessenden Partikel die Fotozellenzeile lediglich mit einem Teilbereich ihres Durchmessers passiert haben.

Nach einem weiteren der Erfindung zu Grunde liegenden Gedanken lässt sich in umgekehrter Weise mit Hilfe der in der zuvor beschriebenen Weise bestimmten optimierten Belichtungszeit anhand der bekannten Werte für die Höhe und die Breite der im Wesentlichen identisch ausgebildeten Fotozellen in der Fotozellenzeile die Fallgeschwindigkeit und der Durchmesser der vermessenen Partikel errechnen.

Anders ausgedrückt kann mithilfe der zuletzt beschriebenen Ausführungsform des erfindungsgemäßen Verfahrens in einer Messevorrichtung, in der das erfindungsgemäße Verfahren zum Einsatz gelangt, selbstständig eine anfängliche Einstellung der selben auf den jeweiligen mittleren Durchmesser der zugeführten Partikel erfolgen, um die Messgenauigkeit zu optimieren.

Um bei der Durchführung des erfindungsgemäßen Verfahrens eine verifizierte Aussage darüber treffen zu können, ob ein Partikel die Messzelle vollständig passiert hat oder nicht, wird nach einem weiteren der Erfindung zu Grunde liegenden Gedanken ein Messwert für den erfassten Durchmesser eines Partikels in einem Messzyklus bevorzugt nur dann als ein verifizierter Messwert herangezogen, beispielsweise für eine statistische Auswertung, wenn wenigstens der Helligkeitswert in einer ersten Fotozelle und der Helligkeitswert in einer im Abstand hierzu angeordneten weiteren Fotozelle der Fotozellenzeile dem Wert für die maximal erzielbare Helligkeit während einer Messung entspricht. Durchmesserwerte oder mögliche Durchmesserwerte, bei denen diese Bedingung nicht erfüllt ist, werden demgegenüber als Messwerte verworfen. Durch die zuvor beschriebene Ausführungsform des erfindungsgemäßen Verfahrens ergibt sich der Vorteil, dass Partikel, die die Messzelle lediglich mit einem seitlichen Teilbereich passieren oder Partikel, die in Strahlrichtung des Lichts betrachtet hintereinander überlappend die Messzelle passieren, von einer statistischen Erfassung ausgeschlossen werden. Hierdurch werden Fehlmessungen weitestgehend vermieden.

Nach einem weiteren der Erfindung zu Grunde liegenden Gedanken werden die erfassten und bevorzugt in der zuvor beschriebenen Weise verifizierten Durchmesserwerte für die Partikel bei dem Einsatz des Verfahrens in einer Siebmaschine mit einem vorgegebenen Durchmesser-Schwellenwert verglichen. Im Falle eines Überschreitens oder Unterschreitens des Durchmesser-Schwellenwerts wird erfindungsgemäß die der Siebvorrichtung pro Zeiteinheit zugeführte Menge an Siebgut verändert und/oder der Siebvorgang gestoppt, bzw. der aus der Siebvorrichtung austretende Partikelstrom umgeleitet, um beispielsweise im Falle eines Siebbruchs oder im Falle eines Überlaufens des Siebes die Verunreinigung des Siebguts mit zu großen Partikeln bzw. zu kleinen Partikeln zuverlässig auszuschließen.

Die Erfindung wird nachfolgend mit Bezug auf die Zeichnung anhand einer Vorrichtung zur Durchführung des Verfahrens beschrieben, die in einer Siebmaschine zum Einsatz gelangt.

In der Zeichnung zeigt:

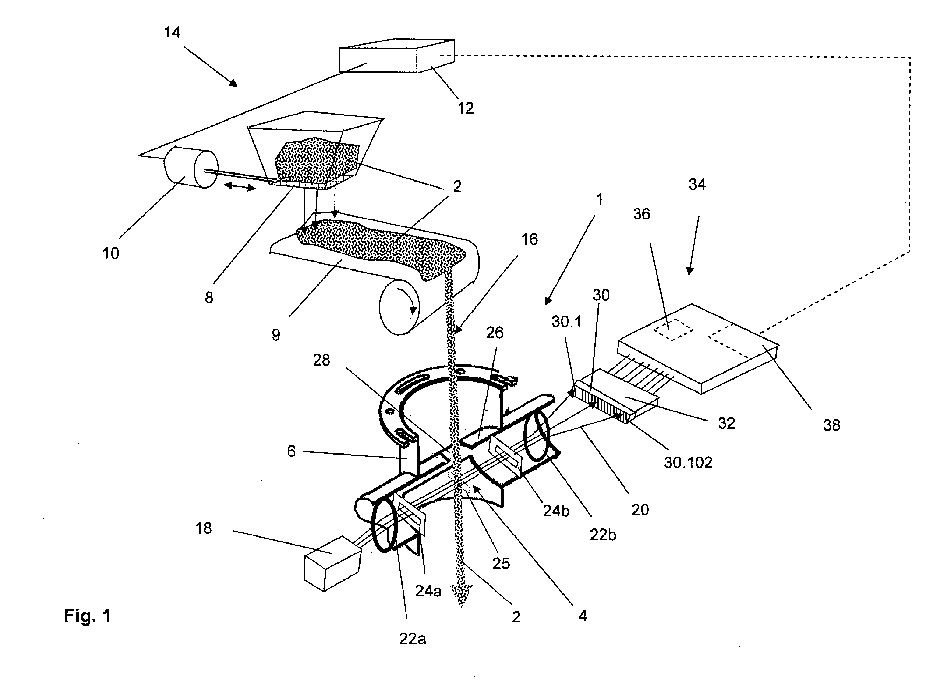

- Fig.1: eine schematische Darstellung einer Siebmaschine mit einer erfindungsgemäßen Vorrichtung zur Durchführung des Verfahrens.

Wie in Fig.1 gezeigt ist, umfasst eine erfindungsgemäße Vorrichtung 1 zur Bestimmung der Größe von Partikeln 2 eine Messzelle 4, die in einem Gehäuse in Form eines Rohrstutzens 6 angeordnet ist.

Bei den Partikeln 2 handelt es sich um Schüttgut, beispielsweise um Polystyrolkugeln, welche aus einem schematisch angedeuteten Vorratsbehälter 6 mit einem darunter angeordneten Sieb 8 auf ein Förderband 9 gelangen. Der Vorratsbehälter 7 mit dem Sieb 8 wird in bekannter Weise über einen Aktuator 10 in Schwingungen versetzt, der durch eine schematisch angedeutete elektronische Steuerungsvorrichtung 12 gesteuert wird. Der Vorratsbehälter 6 mit dem Sieb 8 und dem Aktuator 10 sowie die Steuerungsvorrichtung 12 bilden zusammen Teile einer Siebvorrichtung 14, die einen durch den Pfeil symbolisierten Partikelstrom 16 erzeugt, welcher von oben her im Wesentlichen vertikal durch den Rohrstutzen 6 und die Messzelle 4 hindurch tritt. Aus darstellungstechnischen Gründen ist in Fig. 1 lediglich der Teil des Partikelstroms 16 dargestellt, welcher von oben her durch die Messzelle 4 hindurchtritt, nicht jedoch derjenige Teil, der an der Messzelle 4 vorbei durch den Rohrstutzen 6 hindurchfällt.

Die erfindungsgemäße Vorrichtung 1 umfasst weiterhin eine Lichtquelle 18, die beispielsweise ein Weißlichtstrahler oder auch ein LED-Strahler sein kann. Das durch die Pfeile 20 symbolisierte Licht der Lichtquelle 18 wird hierbei über ein lediglich schematisch angedeutetes erstes Abbildungssystem umfassend ein erstes Linsensystem 22a und eine erste Blende 24a in die Messzelle 4 eingeleitet. Dort durchstrahlt das Licht 20 den Partikelstrom 16 in einem linienförmigen Bereich 25 und wird bevorzugt über ein schematisch angedeutetes zweiten Abbildungssystem, welches eine zweite Blende 24b und ein nachgeordnetes zweites Linsensystem 22b umfasst, auf einer Fotozellenzeile 30 abgebildet.

Um hierbei zu gewährleisten, dass lediglich ein Teil des Partikelstroms 16 und nicht der gesamte Partikelstrom durch die Messzelle 4 hindurchtritt, ist bei der bevorzugten Ausführungsform der Erfindung ein sich in Querrichtung durch den Rohrstutzen 6 hindurch erstreckendes Abdeckelement 26 vorgesehen, welches den Strahlengang des Lichts 20 nach oben hin abdeckt. Im Abdeckelement 26 ist oberhalb des durch das erste Linsensystem 22a und die Blende 24a erzeugten linienförmig durchstrahlte Bereichs 25, in welchem der Partikelstrom 16 durchstrahlt wird, eine Öffnung 28 angeordnet, durch die der Teilstrom 16 des Siebguts hindurch tritt, wie dies in Fig.1 schematisch angedeutet ist. Der größte Teil des Partikelstroms wird durch das Abdeckelement 26, welches an seiner Oberseite bevorzugt eine im Querschnitt dreieckförmige oder bogenförmige Querschnittsform besitzt, um die Messzelle 4 herum abgeleitet und gelangt von dort aus beispielsweise ebenso wie der auf der Unterseite aus der Messzelle 4 heraustretende Teilstrom 16 aus Partikeln 2 zur weiteren Verwendung in einen nicht dargestellten Vorratsbehälter.

Wie der Darstellung von Fig. 1 weiterhin entnommen werden kann, weist die Fotozellenzeile 30 eine Vielzahl von Fotozellen, beispielsweise 102 Fotozellen auf, von denen aus darstellungstechnischen Gründen lediglich wenige Fotozellen gezeigt sind und ausschließlich die erste Fotozelle 30.1 und die letzte Fotozelle 30.102 der Fotozellenzeile 30 mit Bezugsziffern bezeichnet wurden. Hierbei sollen zum einfacheren Verständnis die dem Punkt folgenden Ziffern 1 und 102 die jeweilige Positionsnummer der Fotozelle in der Fotozellenzeile 30 angeben.

Um das von einer jeden Fotozelle 30.1 bis 30.102 bereit gestellte elektrische Helligkeitssignal, welches durch einen oder mehrere der während eines Messzyklus durch die Messzelle 4 hindurchtretenden Partikel 2 auf der Fotozellenzeile 30 aufgrund der Abschattung erzeugt wird, in einen digitalen Helligkeitswert zu überführen, ist einer jeden Fotozelle 30.1 bis 30.102 der Fotozellenzeile 30 ein Analog-Zu-Digitalwandler 32 zugeordnet. Die einzelnen Analog-Zu-Digitalwandler für jede Fotozelle sind bevorzugt in einem gemeinsamen Bauteil zusammengefasst und werden aus diesem Grunde in Fig. 1 schematisch als ein Analog-Zu-Digitalwandler 32 dargestellt. Die vom Analog-Zu-Digitalwandler aus den elektrischen Signalen der Fotozellen erzeugten digitalen Signalwerte werden über nicht näher bezeichnete Leitungen einer elektronischen Auswerteinrichtung 34 zugeführt, die bevorzugt als ein bekannter Mikrocontroller ausgestaltet ist. Die elektronische Auswerteinrichtung 34 besitzt hierbei einen Prozessor 36, der die durch die Analog-Zu-Digitalwandler 32 erzeugten digitalen Signalwerte einer jeden Fotozelle 30.1 bis 30.102 der Fotozellenzeile 30 über eine vorgegebene und bevorzugt variable Zeitdauer hinweg - die zuvor als Belichtungszeit oder Integrationszeit bezeichnet wurde - aufintegriert. Der durch Addition am Ende der Zeitdauer erhaltene Helligkeitswert, der beispielsweise ein digitaler Wert zwischen 0 und 255 ist, wird für den betreffenden Messzyklus zusammen mit der Positionsnummer 1 bis 102 der zugehörigen Fotozelle 30.1 bis 30.102 in einem elektronischen Speicher 38 der Auswerteinheit 34 ablegt, um hieraus über die Breite der Fotozellenzeile 30 hinweg einen Helligkeitsverlauf zu erhalten.

Aus den im Speicher 38 abgelegten digitalen Werten für den Helligkeitsverlauf errechnet der Prozessor 36 gleichzeitig oder im Anschluss daran durch Subtraktion der Helligkeitswerte zweier aufeinander folgender Fotozellen einen Differenzwert, der - über die gesamte Fotozellenzeile 30 hinweg betrachtet - einem diskreten Wert für die Steigung des Helligkeitsverlaufs im Bereich der beiden aufeinander folgenden Fotozellen entspricht. Dieser Wert wird über die gesamte Fotozellenzeile 30 hinweg zusammen mit der Positionsnummer der ersten oder zweiten der beiden benachbarten Fotozellen, deren Helligkeitswerte voneinander abgezogen wurden, bevorzugt in einem zweiten Speicherbereich des Speichers 38 in Form von Wertepaaren abgelegt, um den Verlauf der Steigung des Helligkeitsverlaufs zu erhalten. Gleichzeitig oder im Anschluss daran vergleicht der Prozessor 36 die in der zuvor genannten Weise durch Differenzbildung erzeugten Werte für die Steigung des Helligkeitsverlaufs mit einem vorgegebenen, bevorzugt veränderbaren Schwellenwert, und legt die Positionsnummer der betreffenden Fotozelle, bei der der Schwellenwert erreicht oder überschritten wird, im Speicher 38 ab.

Wenn ein Partikel 2 des Partikelstroms 16 während der Integrationszeit oder Belichtungszeit innerhalb eines Messzyklus die Messzelle 4 vollständig passiert hat, werden vom Prozessor 36 insgesamt zwei im Bereich des linken und des rechten Endes der Fotozellenzeile 30 gelegene Fotozellen ermittelt, bei denen der zuvor genannte Sollwert für die Steigung überschritten wurde. Durch eine einfache Differenzbildung der Positionsnummern und Multiplikation des erhaltenen Zahlenwerts mit der Breite einer Fotozelle berechnet der Prozessor 36 hieraus anschließend den Durchmesser des gerade erfassten Partikels 2. Der jeweilige Durchmesserwert wird beispielsweise zur weiteren statistischen Analyse der Durchmesserverteilung im Siebgut ebenfalls im Speicher 38 abgelegt oder auf einer Anzeigevorrichtung ausgegeben. Für den Fall, dass während eines Messzyklus keine zwei beabstandeten Fotozellen ermittelt werden können, weil beispielsweise ein Partikel 2 die Fotozellenzeile 30 nur teilweise passiert hat oder zwei in Strahlrichtung des Lichts 20 hinter einander liegende Partikel 2 den linienförmig durchstrahlten Bereich 25 gleichzeitig passiert haben, wird der Durchmesserwert vom Prozessor 36 verworfen.

Um die Gefahr von Fehlmessungen weiter zu reduzieren, wird ein ermittelter Durchmesserwert vom Prozessor 36 bevorzugt nur dann als ein solcher verifiziert und im Speicher 38 abgelegt, wenn gleichzeitig im Bereich des linken und rechten Randbereichs der Fotozellenzeile 30, d.h. beispielsweise im Bereich der Fotozellen 30.1 und 30.102 ein Helligkeitswert ermittelt wird, der dem maximalen Helligkeitswert entspricht.

Wie der Darstellung von Fig. 1 weiterhin entnommen werden kann, ist die elektronische Auswerteinrichtung 34 mit der elektronischen Steuerungseinrichtung 12 der Siebvorrichtung 14 gekoppelt, um für den Fall, dass die durch die erfindungsgemäße Vorrichtung 1 in Echtzeit bestimmten Durchmesserwerte von zwei oder mehreren Partikeln 2 über mehrere Messzyklen hinweg einen vorgegebenen maximalen oder minimalen Grenzwert über- oder unterschreiten, die Siebvorrichtung 14 stillzusetzen und/oder den Partikelstrom 16 umzuleiten. Hierdurch wird sichergestellt, dass im Falle eines Bruchs des Siebes 8 keine zu großen Partikel 2 in das endgültige Produkt gelangen, bzw. das endgültige Produkt im Falle eines Überfahrens des Siebes 8 nicht mit zu kleinen Partikeln verunreinigt wird.

### Liste der Bezugszeichen

- 1: erfindungsgemäße Vorrichtung
- 2: Partikel
- 4: Messzelle
- 6: Vorratsbehälter
- 8: Sieb
- 9: Förderband
- 10: Aktuator
- 12: elektronische Steuerungsvorrichtung für Siebvorrichtung
- 14: Siebvorrichtung
- 16: Partikelstrom
- 18: Lichtquelle
- 20: Licht
- 22a: erstes Linsensystem
- 22b: zweites Linsensystem
- 24a: erste Blende
- 24b: zweite Blende
- 25: linienförmig durchstrahlter Bereich
- 26: Abdeckelement
- 30: Fotozellenzeile
- 30.1: erste Fotozelle in Fotozellenzeile
- 30.102: letzte Fotozelle in Fotozellenzeile
- 32: Analog-Zu-Digitalwandler
- 34: elektronische Auswerteinrichtung
- 36: Prozessor
- 38: Speicher

## Patentansprüche

1. Verfahren zur Bestimmung der Größe von Partikeln in einem Partikelstrom, insbesondere einem Siebgutstrom, der durch eine Messzelle hindurch tritt, die in einem linienförmigen Bereich mit Licht durchstrahlt wird, wobei der linienförmig durchstrahlte Bereich durch ein optisches Abbildungssystem optisch auf eine einzelne Zeile aus benachbart zueinander angeordneten, in vorgegebenen Zyklen ausgelesenen Fotozellen, insbesondere Fotodioden, abgebildet und aus den Signalen einer jeden Fotozelle ein digitales Helligkeitssignal erzeugt wird, und wobei aus der Position einer Fotozelle in der Fotozellenzeile und der Größe des der Fotozelle zugeordneten digitalen Signalwerts ein Helligkeitsverlauf über die Fotozellenzeile hinweg ermittelt wird,
**dadurch gekennzeichnet,dass**
aus der Steigung des Helligkeitsverlaufs und/oder aus der Änderung der Steigung des Helligkeitsverlaufs während eines Auslesezyklus ein Wert für den erfassten Durchmesser eines Partikels bestimmt wird, welches den linienförmig durchstrahlten Bereich in der Messzelle passiert hat.

2. Verfahren nach Anspruch 1,
**dadurchgekennzeichnet**, dass
die Werte für die Steigung des Helligkeitsverlaufs durch Differenzbildung der Helligkeitswerte zwischen einer Fotozelle und einer benachbarten Fotozelle ermittelt werden.

3. Verfahren nach einem der vorhergehenden Ansprüche,
**dadurchgekennzeichnet,**dass
die Steigung des Helligkeitsverlaufs über die Fotozellenzeile hinweg erfasst wird, und dass der räumliche Abstand zweier Fotozellen in der Fotozellenzeile, bei denen der Betrag der Steigung des Helligkeitsverlaufs einen vorgegebenen Schwellenwert überschreitet, als Maß für den Partikeldurchmesser herangezogen wird.

4. Verfahren nach einem der vorhergehenden Ansprüche,
**dadurch gekennzeichnet,dass**
ein erster und ein zweiter Wendepunkt des Helligkeitsverlaufs ermittelt wird, und dass aus dem Abstand der einem jeden Wendepunkt zugeordneten Fotodiode ein Durchmesserwert für einen Partikel bestimmt wird.

5. Verfahren nach Anspruch 2 und 4,
**dadurch gekennzeichnet,dass**
der Wendepunkt durch wiederholte Differenzbildung zwischen zwei aus der Differenz zwischen den Helligkeitswerten benachbarter Fotozellen bestimmten Werten für die Steigung über die Fotozellenzeile hinweg und Vergleichen der ermittelten weiteren Differenzwerte mit einem vorgegebenen Wert, insbesondere dem Wert 0, bestimmt wird.

6. Verfahren nach einem der vorhergehenden Ansprüche,
**dadurch gekennzeichnet,dass**
ausschließlich eine Fotozellenzeile vorgesehen ist, und dass das optische Abbildungssystem ein System von Vergrößerungslinsen oder Spiegeln umfasst, welches den linienförmig durchstrahlten Bereich innerhalb der Messzelle um einen vorgegebenen Vergrößerungsfaktor, insbesondere um einen Faktor 2, 4 oder 8, vergrößert auf die Fotozellenzeile abbildet.

7. Verfahren nach einem der vorhergehenden Ansprüche,
**dadurch gekennzeichnet,dass**
alle Fotozellen der Fotozellenzeile im Wesentlichen gleichzeitig nach einer vorgegebenen Belichtungszeit ausgelesen werden, und dass die Belichtungszeit zwischen einem Auslesen und einem erneuten Auslesen der Fotozellenzeile im Wesentlichen konstant ist.

8. Verfahren nach Anspruch 7,
**dadurch gekennzeichnet,dass**
die Belichtungszeit zwischen zwei Auslesevorgängen durch Produktbildung der Zeilenhöhe der Fotozellenzeile mit dem Abbildungsverhältnis, geteilt durch die Fallgeschwindigkeit der Partikel, errechnet wird.

9. Verfahren nach einem der Ansprüche 1 bis 6,
**dadurch gekennzeichnet,dass**
alle Fotozellen der Fotozellenzeile im Wesentlichen gleichzeitig ausgelesen werden, und dass die Belichtungszeit zwischen zwei Gruppen von aufeinander folgenden Auslesevorgängen der Fotozellenzeile variiert wird, insbesondere ausgehend von einem vorgegebenen Maximalwert um vorgegebene Zeitwerte verringert wird, um eine für die jeweilige Fallgeschwindigkeit der erfassten Partikel optimierte Belichtungszeit zu bestimmen.

10. Verfahren nach Anspruch 9,
**dadurch gekennzeichnet,dass**
die Belichtungszeit schrittweise bis auf einen minimalen Belichtungszeitwert herab verringert wird, der durch Division der Zeilenhöhe der Fotozellenzeile durch die theoretisch erzielbare maximale Fallgeschwindigkeit der Partikel errechnet wird.

11. Verfahren nach Anspruch 9 oder 10,
**dadurch gekennzeichnet,dass**
die optimierte Belichtungszeit durch Erfassen des Zeitwertes bestimmt wird, bei dem während einer vorgegebenen Anzahl von aufeinanderfolgenden Auslesevorgängen ein Maximum von Wendepunkten und/oder ein Maximum von Werten im Helligkeitsverlauf auftritt, bei denen der vorgegebene Schwellenwert des Helligkeitsverlaufs überschritten wird.

12. Verfahren nach einem der vorhergehenden Ansprüche,
**dadurch gekennzeichnet,dass**
ein Messwert für den erfassten Durchmesser eines Partikels als ein verifizierter Messwert herangezogen wird, wenn wenigstens der Helligkeitswert in einer ersten Fotozelle und der Helligkeitswert in einer im Abstand hierzu angeordneten weiteren Fotozelle der Fotozellenzeile dem Wert für die maximal erzielbare Helligkeit während einer Messung entspricht.

13. Verfahren nach einem der vorhergehenden Ansprüche,
**dadurch gekennzeichnet,dass**
die erfassten Durchmesserwerte für die Partikel mit einem vorgegebenen Durchmesser-Schwellenwert verglichen werden, und dass die einer Siebvorrichtung pro Zeiteinheit zugeführte Menge an Siebgut bei einem Unterschreiten oder Überschreiten des Schwellenwertes verändert und/oder der Siebvorgang gestoppt und/oder der aus der Siebvorrichtung austretende Partikelstrom umgeleitet wird.

14. Vorrichtung zur Durchführung des Verfahrens zur Bestimmung der Größe von Partikeln (2) in einem Partikelstrom (16), insbesondere in einem Siebgutstrom, nach einem der vorhergehenden Ansprüche, mit einer Messzelle (4), durch die die Partikel (2) hindurch treten, mit einer Lichtquelle (18), die die Messzelle (4) mit Licht (20) beaufschlagt, mit einer Fotozellenzeile (30), auf welche das Licht (20) nach dem Durchqueren der Messzelle (4) auftrifft, und mit einer Auswerteinrichtung (34), welche aus den Signalen der Fotozellen (30.1 bis 30.102) einen Wert für den Durchmesser der Partikel (2) bestimmt,
**dadurch gekennzeichnet,dass**
das Licht (20) der Lichtquelle (18) über ein optisches Abbildungssystem (22a, 24a) auf einen linienförmig durchstrahlten Bereich (25) in der Messzelle (4) fokussiert wird, der sich in Querrichtung zur Bewegungsrichtung der zu messenden Partikel (2) in der Messzelle (4) erstreckt, dass ein weiteres optisches Abbildungssystem (22b, 24b) vorgesehen ist, welches den linienförmig durchstrahlten Bereich (25) auf eine Vielzahl von benachbart entlang der Fotozellenzeile (30) angeordneten Fotozellen (30.1 bis 30.102) abbildet, die jeweils ein der Intensität des einfallenden Lichts (20) entsprechendes elektrisches Signal erzeugen, dass einer jeden Fotozelle (30.1 bis 30.102) ein Analog-Digital-Wandler (32) zugeordnet ist, welcher das elektrische Signal der Fotozelle in einen digitalen Signalwert überführt, der zu der Menge an auf die Fotozelle aufgetroffenem Licht korrespondiert, und dass eine elektronische Auswerteinrichtung (34) vorgesehen ist, die aus der Position einer Fotozelle (30.1 bis 30.102) in der Fotozellenzeile (30) und der Größe des der Fotozelle (30.1 bis 30.102) zugeordneten digitalen Signalwerts einen Helligkeitsverlauf über die Fotozellenzeile hinweg ermittelt und die anhand der Steigung und/oder der Steigungsänderung des Helligkeitsverlaufs ermittelt, ob ein Partikel den linienförmig durchstrahlten Bereich in der Messzelle vollständig passiert hat.

15. Vorrichtung nach Anspruch 14,
**dadurch gekennzeichnet, dass**
diese einen sich in vertikaler Richtung erstreckenden Rohrstutzen (6) umfasst, welcher von den Partikeln (2) durchströmt wird, dass die Messzelle (4) im Zentrum des Rohrstutzens (6) angeordnet ist und dass ein sich in Querrichtung durch den Rohrstutzen (6) hindurch erstreckendes Abdeckelement (26) vorgesehen ist, welches den Rohrstutzen (26) entlang des Strahlengangs des Lichts (20) abdeckt, und in dem oberhalb des linienförmig durchstrahlten Bereichs (25) eine bevorzugt rechteckige Öffnung (28) geformt ist, durch die ein Teil des Partikelstroms (16) hindurch tritt.
